# EUROPÄISCHE PATENTSCHRIFT

(11) **EP 0 562 423 B1**
(45) Veröffentlichungstag und Bekanntmachung des Hinweises auf die Patenterteilung: **11.01.1995**
(21) Anmeldenummer: 93104296.4
(22) Anmeldetag: 16.03.1993
(51) Int. Cl.: B60R 22/46

(54) **Gurtaufroller mit an der Gurtspule angreifendem Gurtstraffer**
Belt retractor with a tensioner operating on the reel
Enrouleur de ceinture muni d'un tendeur opérant sur la bobine

(30) Priorität: 24.03.1992 DE 4209540
(43) Veröffentlichungstag der Anmeldung: 29.09.1993
(73) Patentinhaber: TRW REPA GMBH, 73553 Alfdorf (DE)
(72) Erfinder: Frei, Bernhard, W-7076 Waldstetten (DE)
(74) Vertreter: Degwert, Hartmut, Dipl.-Phys.

(56) Entgegenhaltungen:
- EP-A- 0 153 726
- EP-A- 0 361 075
- DE-C- 3 600 004
- US-A- 4 925 212

## Beschreibung

Die Erfindung betrifft einen Gurtaufroller mit einem an der Gurtspule über einen Kupplungsmechanismus angreifenden Gurtstraffer.

Bei einem aus der DE-PS 36 00 004 bekannten Gurtaufroller dieser Art ist nach erfolgter Gurtstraffung die Gurtspule blockiert, da der Kupplungsmechanismus durch Verklemmen der Klemmrollen die Gurtspule starr mit dem Strafferantrieb koppelt, der seinerseits nach Erreichen des Strafferhubes durch ein Sperrwalzensystem blockiert ist. Es wurde bereits versucht, die Schutzwirkung von mit Gurtstraffern ausgerüsteten Sicherheitsgurtsystemen zu steigern, indem nach erfolgter Gurtstraffung eine Energiewandlung vorgenommen wird, um Lastspitzen im Gurtband abzubauen. Eine Energiewandlung ist beispielsweise durch Streckglieder möglich, die in den Kraftfluß des Gurtsystems eingefügt sind und unter Last plastisch verformt werden.

Durch die Erfindung wird ein neuartiger Gurtaufroller mit Gurtstraffer geschaffen, in den eine Einrichtung zur Energiewandlung integriert ist. Der erfindungsgemäße Gurtaufroller ist dadurch gekennzeichnet, daß in den Kraftfluß zwischen dem Kupplungsmechanismus und der Gurtspule ein Torsionsstab eingefügt ist, der nach erfolgter Gurtstraffung unter der über das Gurtband eingeleiteten Last energieverzehrend um seine Achse verdrillt wird. Ein solcher Torsionsstab läßt nach erfolgter Gurtstraffung eine Rückdrehung der Gurtspule um einen Drehwinkel zu, der für die beabsichtigte Energiewandlung mehr als ausreichend ist. Torsionsstäbe aus geeigneten Stahlsorten lassen eine Verdrillung um mehr als 360° zwischen den beiden axialen Enden des Torsionsstabes zu. Der Torsionsstab läßt sich in besonders vorteilhafter Weise in den Gurtaufroller integrieren, wenn sein erstes axiales Ende mit der Gurtspule kraftschlüssig gekoppelt und das zweite axiale Ende als zylindrischer Kupplungsfortsatz ausgebildet wird, den die Kupplungsglieder des Kupplungsmechanismus umgeben. In dieser Anordnung beansprucht der Torsionsstab nur den Raum, den bei herkömmlichen Gurtaufrollern ein Verankerungsstift für das Gurtband einnimmt, der koaxial in die Gurtspule eingesetzt ist.

Weitere Merkmale und Vorteile der Erfindung ergeben sich aus der folgenden Beschreibung und aus der Zeichnung, auf die Bezug genommen wird. In der Zeichnung zeigen:
- Fig. 1: einen Teilschnitt eines Gurtaufrollers mit Gurtstraffer;
- Fig. 2: einen Querschnitt entlang Linie II-II in Fig. 1;
- Fig. 3: schematisch eine Sperrklinke zum Zusammenwirken mit einer Sperrverzahnung an der Gurtspule des Gurtaufrollers; und
- Fig. 4: einen Schnitt entlang Linie IV-IV in Fig. 1.

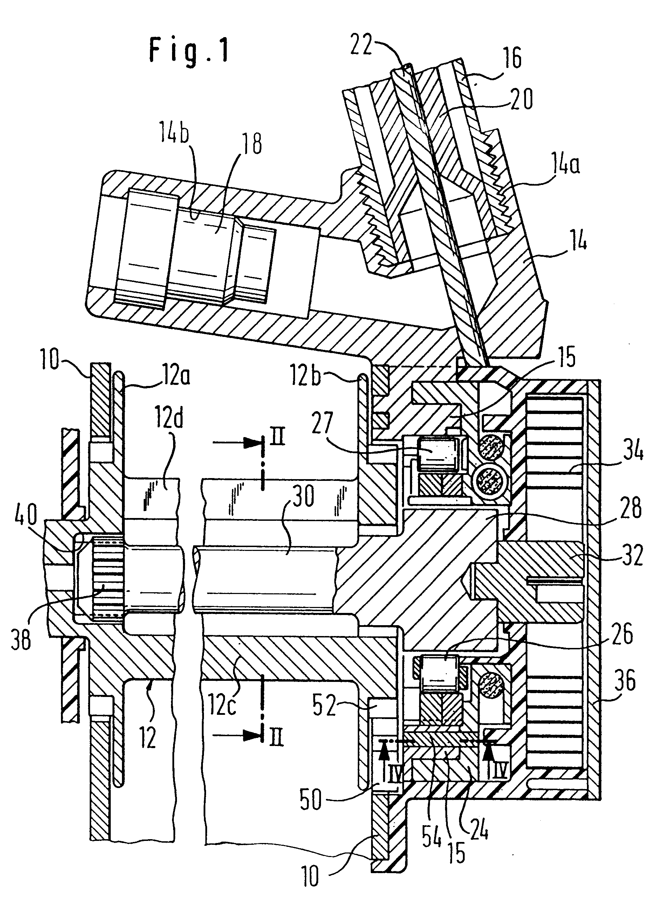

Bei der in Fig. 1 gezeigten Ausbildung des Gurtaufrollers ist zwischen den Schenkeln eines lasttragenden Gehäuses 10 eine Gurtspule 12 drehbar gelagert. An dem Gehäuse 10 ist ein Sokkel 14 für den pyrotechnischen Kolben/Zylinder-Antrieb des Gurtstraffers befestigt. Dieser Sockel 14 besitzt eine Gewindebohrung 14a zum Einschrauben eines Endes eines Zylinders 16 und eine Aufnahmebohrung 14b für einen pyrotechnischen Gasgenerator 18. Im Inneren des Zylinders 16 ist ein Kolben 20 aufgenommen, an dem ein Zugseil 22 befestigt ist. Der pyrotechnische Antrieb des Gurtstraffers ist herkömmlich ausgebildet und wird daher nicht näher beschrieben. Das Zugseil 22 ist mit mehreren Windungen in eine Rille einer Seilscheibe 24 eingelegt und mit seinem Ende an dieser Seilscheibe festgelegt. Diese Seilscheibe 24 ist allgemein glockenförmig gestaltet und Bestandteil eines Klemmrollen-Kupplungsmechanismus, dessen Klemmrollen 26 bei Aktivierung des Gurtstraffers durch Drehung der Seilscheibe 24 in Eingriff mit einem zylindrischen Kupplungsfortsatz 28 eines Torsionsstabes 30 gebracht werden, der koaxial im Inneren der Gurtspule 12 angeordnet ist. In einem einteilig mit dem Sockel 14 verbundenen Lagerring 15 ist ein Klemmwalzen-Gesperre mit Sperrwalzen 27 angeordnet, die eine Drehung der Seilscheibe 24 in Richtung des Gurtbandabzugs verhindern. Mit dem Kupplungsfortsatz 28 ist ferner eine Nabe 32 in Eingriff, an der das innere Ende einer Spiralfeder 34 angreift, die im Inneren eines Federgehäuses 36 aufgenommen ist, an welchem das äußere Ende der Spiralfeder 34 angeschlossen ist. Die Spiralfeder 34 ist die Aufwickelfeder des Gurtaufrollers, deren Federkraft über die Nabe 32 und den Torsionsstab auf die Gurtspule 12 übertragen wird.

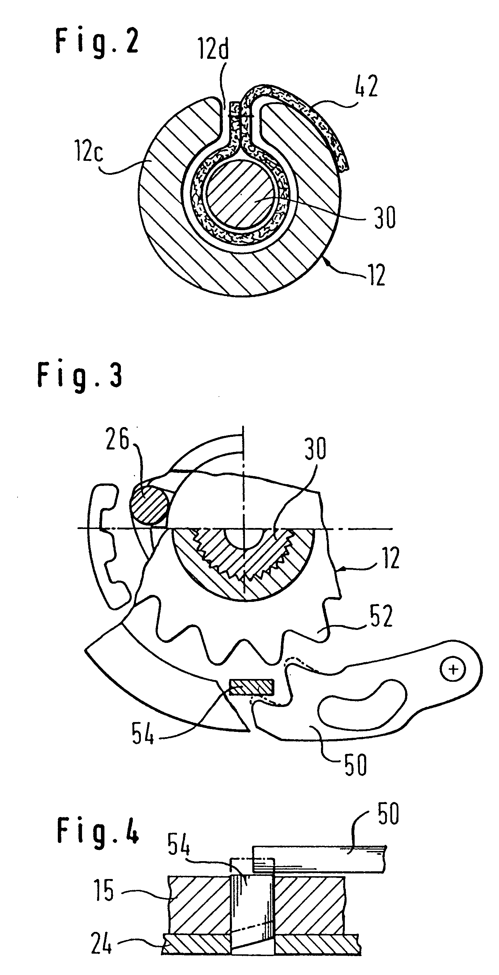

An seinem von dem Kupplungsfortsatz 28 abgewandten axialen Ende ist der Torsionsstab 30 mit einem gerändelten Kopfstück 38 versehen, das in eine passend gestaltete Ausnehmung 40 der Gurtspule 12 formschlüssig eingesetzt ist. Die Gurtspule 12 besteht im wesentlichen aus zwei seitlichen Flanschen 12a, 12b und einem im wesentlichen hohlzylindrischen Mantel 12c, der einen Schlitz 12d für den Durchgang des auf der Gurtspule 12 aufzuwickelnden Gurtbandes 42 aufweist (Fig. 2). Der Torsionsstab 30 erstreckt sich durch den hohlzylindrischen Innenraum des Mantels 12c der Gurtspule. Das Ende des Gurtbandes 42 bildet eine Schlaufe, die auf den Torsionsstab 30 aufgeschoben ist. Der Torsionsstab 30 ist durch das gerändelte Kopfstück 38 drehfest mit der Gurtspule 12 verbunden. Im Ruhezustand, der in Fig. 1 dargestellt ist, sind die Klemmrollen 26 außer Eingriff mit dem Kupplungsfortsatz 28, so daß die Gurtspule 12 mit dem Torsionsstab 30 unbehindert drehbar ist.

Bei Aktivierung des Gurtstraffers wird in an sich bekannter Weise durch die vom Gasgenerator 18 freigesetzten Gase der Kolben 20 im Zylinder 16 zu dessen freiem Ende hin verschoben, wobei über das Zugseil 22 ein Drehmoment am Umfang der Seilscheibe 24 ausgeübt wird. Durch die dann erfolgende Drehung der Seilscheibe 24 werden zunächst die Klemmrollen 26 in Kupplungseingriff mit dem zylindrischen Kupplungsfortsatz 28 bewegt, so daß Seilscheibe 24 und Kupplungsfortsatz 28 drehfest miteinander gekuppelt sind. Durch den Torsionsstab 30 wird die Drehung der Seilscheibe 24 auf die Gurtspule 12 übertragen. Diese wird in Aufrollrichtung angetrieben, so daß die Gurtlose aus dem Sicherheitsgurtsystem herausgezogen wird. Nach beendeter Gurtstraffung sind die Klemmrollen 26 zwischen Seilscheibe 24 und Kupplungsfortsatz 28 verklemmt, so daß der Torsionsstab 30 weiterhin drehfest mit der Seilscheibe 24 gekoppelt ist. Die Seilscheibe wird ihrerseits gegen Drehung in Richtung des Gurtbandabzugs durch die Sperrwalzen 27 am Lagerring 15 blockiert.

Wenn nun aber nach erfolgter Gurtstraffung eine hohe Last im Sicherheitsgurtsystem auftritt und über das Gurtband bei einer Zugspannung von einigen kN ein entsprechend hohes Drehmoment auf die Gurtspule ausgeübt wird, so beginnt der Torsionsstab 30, sich durch Torsion um seine Achse plastisch zu verformen. Durch diese plastische Verformung wird Energie verzehrt und werden die im Gurtband auftretenden Lastspitzen weitgehend absorbiert. Durch Dimensionierung und Materialwahl können sowohl die Schwelle, ab welcher die plastische Verformung des Torsionsstabes 30 einsetzt, als auch sein weiteres Verhalten und die dadurch erzielte Dämpfungswirkung nahezu beliebig eingestellt werden.

Gurtaufroller der beschriebenen Art sind mit einem fahrzeug- und gurtbandsensitiven Blockiermechanismus versehen. Dieser umfaßt eine Sperrklinke 50 (Fig. 3), die mit einer Sperrverzahnung 52 am Flansch 12b der Gurtspule 12 zusammenwirkt. Damit nach erfolgter Gurtstraffung eine Rückdrehung der Gurtspule zur Verformung des Torsionsstabes 30 möglich ist, muß dafür gesorgt werden, daß die Sperrklinke 50 außer Eingriff mit der Sperrverzahnung 52 der Gurtspule 12 bleibt. Zu diesem Zweck ist in einem einteilig mit dem Sockel 14 verbundenen Lagerring 15 eine Blockierplatte 54 in Axialrichtung verschiebbar gelagert. Die Blockierplatte 54 greift mit ihrem der Seilscheibe 24 benachbarten, abgeschrägten Ende in eine rampenförmige Ausnehmung dieser Seilscheibe 24 und liegt mit ihrem gegenüberliegenden Ende unmittelbar neben der Sperrklinke 50, solange der Gurtstraffer nicht aktiviert ist (Fig. 4). Sobald die Seilscheibe 24 in Drehung versetzt wird, stößt sie die Blockierplatte 54 in Axialrichtung in den Schwenkweg der Sperrklinke 50, die nicht mehr in Eingriff mit der Sperrverzahnung 52 der Gurtspule 12 gelangen kann.

## Patentansprüche

1. Gurtaufroller mit einem an der Gurtspule (12) über einen Kupplungsmechanismus angreifenden Gurtstraffer, dadurch gekennzeichnet, daß in den Kraftfluß zwischen dem Kupplungsmechanismus (26) und der Gurtspule (12) ein Torsionsstab (30) eingefügt ist, der nach erfolgter Gurtstraffung unter der über das Gurtband (42) eingeleiteten Last energieverzehrend um seine Achse verdrillt wird.

2. Gurtaufroller nach Anspruch 1, dadurch gekennzeichnet, daß das erste axiale Ende (38) des Torsionsstabes (30) mit der Gurtspule (12) kraftschlüssig gekoppelt und das zweite axiale Ende des Torsionsstabes nach vollendeter Gurtstraffung am Gehäuse (10) des Gurtaufrollers drehfest blockiert ist.

3. Gurtaufroller nach Anspruch 1 oder 2, dadurch gekennzeichnet, daß an dem Torsionsstab (30) ein zylindrischer Kupplungsfortsatz (28) ausgebildet ist, den Wälzkörper-Kupplungsglieder (26) des Kupplungsmechanismus umgeben.

4. Gurtaufroller nach einem der Ansprüche 2 oder 3, dadurch gekennzeichnet, daß der Kupplungsmechanismus ein Drehantriebsteil (24) aufweist, das mittels eines Wälzkörper-Klemmgesperres (15, 27) drehfest am Gehäuse (10) blockierbar ist.

5. Gurtaufroller nach den Ansprüchen 2 bis 4, dadurch gekennzeichnet, daß die Wälzkörper-Kupplungsglieder (26) und auch die Wälzkörper (27) des Wälzkörper-Klemmgesperres (15, 27) an dem Drehantriebsteil (24) gelagert sind.

6. Gurtaufroller nach einem der vorstehenden Ansprüche, dadurch gekennzeichnet, daß der Torsionsstab (30) koaxial in die Gurtspule (12) eingesetzt ist.

7. Gurtaufroller nach Anspruch 6, dadurch gekennzeichnet, daß das Gurtband (42) an seinem gurtspulenseitigen Ende eine Schlaufe bildet, die auf den Torsionsstab (30) aufgeschoben ist.

8. Gurtaufroller nach einem der vorstehenden Ansprüche, mit einer fahrzeug- und gurtbandsensitiven Blockierautomatik, die wenigstens eine Sperrklinke (52) zur Sperrung der Gurtspule (12) aufweist, und einer Antriebsscheibe (24), die bei Aktivierung des Gurtstraffers in Drehung versetzt wird, dadurch gekennzeichnet, daß die Sperrklinke (52) durch Drehung der Antriebsscheibe (24) in eine inaktivierte Stellung bewegt wird.

9. Gurtaufroller nach einem der Ansprüche 3 bis 8, mit einer Aufrollfeder (34) zum Aufrollen des Gurtbandes (42) auf der Gurtspule (12), dadurch gekennzeichnet, daß die Aufrollfeder (34) über eine Nabe (32) an den Kupplungsfortsatz (28) angeschlossen ist.

## Claims

1. A belt retractor with a belt pretensioner device acting on the belt drum (12) by the intermediary of a coupling mechanism, characterized in that a torsion rod (30) is arranged in the force flow path between the coupling mechanism (26) and the belt drum (12), which after tightening of the belt under the load transmitted by the belt (42) is twisted about its axis with the consumption of energy.

2. The belt retractor as claimed in claim 1, characterized in that a first axial end (38) of the torsion rod (30) is force-transmittingly coupled with the belt drum (12) and the second axial end of the torsion rod after completion of the belt tightening is blocked non-rotatably at the housing (10) of the belt retractor.

3. The belt retractor as claimed in claim 1 or 2, characterized in that at the torsion rod (30) a cylindrical coupling head (28) is formed which is surrounded by coupling members (26) of the coupling mechanism formed as roller bodies.

4. The belt retractor as claimed in claim 2 or 3, characterized in that the coupling mechanism comprises a rotation drive member (24) which via a roller blocking mechanism (15, 27) can be blocked non-rotatable at the housing (10).

5. The belt retractor as claimed in claims 2 through 4, characterized in that the coupling members (26) formed as roller bodies and the roller bodies (27) of the roller blocking mechanism (15, 27) are mounted on the rotation drive member (24).

6. The belt retractor as claimed in any one of the preceeding claims, characterized in that the torsion rod (30) is set coaxially in the belt drum (12).

7. The belt retractor as claimed in claim 6, characterized in that the belt (42) is formed into a loop at its end adjacent to belt drum, such loop being slipped over the torsion rod (30).

8. The belt retractor as claimed in any one of the preceeding claims, comprising an automatic locking system sensitive to the vehicle and the belt and which comprises at least one locking pawl (52) to lock the belt drum (12), and a drive pulley (24) which is caused to rotate when the belt pretensioner device is put into operation, characterized in that the locking pawl (52) is moved into an inactivated position on rotation of the drive pulley (24).

9. The belt retractor as claimed in any one of claims 3 through 8 comprising a wind-up spring (34) for winding up the belt (42) onto the belt drum (12), characterized in that the wind-up spring (34) is connected by means of a hub (32) with the coupling head (28).

## Revendications

1. Enrouleur de ceinture comprenant un tendeur de ceinture agissant sur la bobine (12) de la ceinture au moyen d'un mécanisme d'accouplement, caractérisé en ce qu'une barre de torsion (30) insérée dans le flux de force entre le mécanisme d'accouplement (26) et la bobine (12) de la ceinture subit une torsion autour de son axe en absorbant l'énergie après qu'une tension de la ceinture a été produite sous l'effet de la charge transmise par la sangle (42) de la ceinture.

2. Enrouleur de ceinture selon la revendication 1, caractérisé en ce que la première extrémité axiale (38) de la barre de torsion (30) est accouplée par la force à la bobine (12) de la ceinture et la seconde extrémité axiale de la barre de torsion est bloquée de manière à être solidarisée en rotation avec le boîtier (10) de l'enrouleur de ceinture après que la tension de la ceinture a été produite.

3. Enrouleur de ceinture selon la revendication 1 ou 2, caractérisé en ce qu'un prolongement cylindrique (28) faisant partie de l'accouplement est formé sur la barre de torsion (30) et est entouré d'organes d'accouplement (26), formés de corps de roulement, du mécanisme d'accouplement.

4. Enrouleur de ceinture selon l'une des revendications 2 ou 3, caractérisé en ce que le mécanisme d'accouplement comprend une pièce (24) d'entraînement en rotation qui peut être bloquée de manière à être solidaire en rotation du boîtier (10) au moyen d'un verrou de blocage à corps de roulement (15, 27).

5. Enrouleur de ceinture selon les revendications 2 à 4, caractérisé en ce que les organes d'accouplement (26) formés de corps de roulement ainsi que les corps de roulement (27) du verrou de blocage à corps de roulement (15, 27) sont montés sur la pièce (24) d'entraînement en rotation.

6. Enrouleur de ceinture selon l'une quelconque des revendications précédentes, caractérisé en ce que la barre de torsion (30) est logée coaxialement dans la bobine (12) de la ceinture.

7. Enrouleur de ceinture selon la revendication 6, caractérisé en ce que la sangle (42) de la ceinture forme, à son extrémité côté bobine, une boucle qui est enfilée sur la barre de torsion (30).

8. Enrouleur de ceinture selon l'une quelconque des revendications précédentes, comprenant un système automatique de blocage qui répond au véhicule et à la sangle de la ceinture et comporte au moins un cliquet d'arrêt (52) pour le blocage de la bobine (12) de la ceinture, ainsi qu'un disque d'entraînement (24) qui est entraîné en rotation lors de la mise en action du tendeur de ceinture, caractérisé en ce que le cliquet d'arrêt (52) est déplacé pour être mis en position d'inactivité par une rotation du disque d'entraînement (24).

9. Enrouleur de ceinture selon l'une des revendications 3 à 8, comprenant un ressort (34) d'enroulement de la sangle (42) de la ceinture sur la bobine (12), caractérisé en ce que le ressort d'enroulement (34) est relié au moyen d'un moyeu (32) au prolongement (28) faisant partie de l'accouplement.
